# DEMANDE DE BREVET EUROPEEN

(11) **EP 3 093 582 A1**
(43) Date de publication de la demande: **16.11.2016**
(21) Numéro de dépôt: 16169406.2
(22) Date de dépôt: 12.05.2016
(51) Int. Cl.: F24J 3/08, F28D 20/00

(54) **DISPOSITIF DE STOCKAGE GÉOTHERMIQUE COMPORTANT UN MASSIF DE SOL RECONSTITUÉ**

(30) Priorité: 12.05.2015 FR 1554255
(71) Demandeur: DTP, 78280 Guyancourt (FR)
(72) Inventeur: HAMONET, Vincent, 78320 Levis Saint Nom (FR)
(74) Mandataire: Loyer & Abello

(57) **Abrégé**

Dispositif géothermique de stockage d'énergie comportant :
- un massif de sol reconstitué (4) comportant un coeur interne (18),
- un échangeur thermique comportant
o un module de raccordement vannage (8)
o une conduite de raccordement aller (6) et une conduite de raccordement retour (7) connectées au module de raccordement vannage (8),
o une pluralité de boucles thermiques (9) intégrées dans le massif de sol reconstitué, et connectées au travers du module de raccordement vannage (8) aux conduites de raccordement de manière à permettre la circulation du fluide caloporteur sélectivement depuis ou vers une ou plusieurs boucles thermiques respectivement vers ou depuis les conduites de raccordement
et dans lequel chaque boucle thermique se développe dans une couche horizontale de le massif de sol reconstitué, les boucles thermiques étant distribués dans plusieurs couches horizontales situées à des altitudes distinctes dans le massif de sol reconstitué.

## Description

### Domaine technique

L'invention se rapporte au domaine des dispositifs de stockage d'énergie thermique. Plus particulièrement l'invention se rapporte au domaine des dispositifs de stockage géothermique.

### Arrière-plan technologique

Les dispositifs de stockage géothermique constituent une solution de stockage de chaleur représentant une alternative ou un complément viable aux systèmes de production de chaleur traditionnels. En effet, un excédent inutilisé de chaleur ou de froid est stockée dans le sol dans l'attente d'une utilisation ultérieure, avec une temporalité de journalière (diurne / nocturne) à saisonnière (hiver/été). La ressource énergétique peut provenir entre autres de capteurs solaires, de chaleur ou froid industriel, de système de climatisation ou d'incinération de déchets.

Le dispositif géothermique est connecté par exemple à un bâtiment en vue de lui fournir une fonction de régulation thermique. Une telle fonction de régulation thermique est par exemple un apport de chaleur pour le chauffage d'une eau sanitaire ou encore pour le chauffage du bâtiment, soit directement, soit indirectement au moyen d'un réseau de chaleur à fluide caloporteur, avec présence d'une pompe à chaleur pour ajuster les températures entre les différents éléments du réseau. Un autre exemple de fonction de régulation thermique consiste à fournir une source froide permettant de climatiser le bâtiment.

Le dispositif d'échange thermique peut être de type ouvert (prélèvement et réinjection d'eau dans le milieu) ou fermé (circulation d'un fluide caloporteur dans un tuyau en contact avec le sol), vertical (forages), horizontal (sonde sèche horizontale) ou mixte (puits ou tranchées)

### Résumé

Selon un mode de réalisation, l'invention fournit un dispositif géothermique de stockage d'énergie thermique comportant :
- un massif de sol reconstitué,
- un échangeur thermique comportant
   o un module de raccordement vannage,
   o une conduite de raccordement aller connectée au module de raccordement vannage et destinée à alimenter une unité de distribution en fluide caloporteur provenant de module de raccordement vannage,
   o une conduite de raccordement retour connectée au module de raccordement vannage et destinée à alimenter ledit module de raccordement vannage en fluide caloporteur provenant de l'unité à l'unité de distribution,
   o une pluralité de boucles thermiques comportant chacune une canalisation de circulation du fluide caloporteur, chaque canalisation présentant une géométrie en boucle et étant intégrée dans le massif de sol reconstitué, les extrémités de chaque canalisation étant connectées au travers du module de raccordement vannage aux conduites de raccordement de manière à permettre la circulation du fluide caloporteur sélectivement depuis ou vers une ou plusieurs boucles thermiques respectivement vers ou depuis les conduites de raccordement.
dans lequel chaque boucle thermique se développe au moins dans une couche horizontale du massif de sol reconstitué, les boucles thermiques étant distribuées dans plusieurs couches horizontales situées à des altitudes distinctes dans le massif de sol reconstitué.

Selon des modes de réalisation, un tel dispositif géothermique de stockage d'énergie thermique peut comporter une ou plusieurs des caractéristiques suivantes :
Selon un mode de réalisation, le massif de sol reconstitué comporte une couche de couverture isolante recouvrant un coeur interne du massif de sol reconstitué, les boucles thermiques étant intégrées dans le coeur interne du massif de sol reconstitué.

De préférence, on utilise des matériaux présentant des caractéristiques thermiques choisies en fonction de leur position relative par rapport à l'assemblage géométrique des boucles thermiques. Selon un mode de réalisation, le coeur interne du massif de sol reconstitué comporte au moins un matériau à capacité de stockage thermique disposé entre les boucles thermiques de manière à permettre un échange thermique avec au moins une boucle thermique.

Selon un mode de réalisation, le matériau thermiquement conducteur de l'enrobage est choisi dans le groupe constitué du sable argileux humide et du sable limoneux humide.

On entend par sable sec des sables ayant par exemple une teneur en eau de 6 % ou moins. On entend par sable humide ou très humide des sables ayant une teneur en eau de 14 % ou plus. L'obtention d'une teneur en eau de 14% ou plus peut nécessiter une additivation granulométrique et/ou chimique.

Selon un mode de réalisation, la couche de couverture isolante présente une conductivité thermique plus faible que le coeur interne du massif de sol reconstitué et le coeur interne du massif de sol reconstitué présente une capacité calorifique plus élevée que la couche isolante.

Selon un mode de réalisation, le dispositif géothermique comporte en outre, agencé autour d'au moins une canalisation de boucle thermique, un enrobage en matériau thermiquement conducteur de manière à augmenter la capacité de transfert thermique de ladite boucle thermique vers le coeur interne du massif de sol reconstitué.

Selon un mode de réalisation, la première extrémité et la seconde extrémité d'une boucle thermique forment un angle supérieur à 45° et de préférence supérieur ou égal à 90° au niveau de la connexion avec le module de raccordement vannage.

Selon un mode de réalisation, le module de raccordement vannage comporte une pluralité de valves à états commutables pilotées par une unité de commande, le module de raccordement vannage comportant au moins un premier état de commutation dans lequel la conduite de raccordement aller est reliée à une première extrémité d'une première boucle thermique et la conduite de raccordement retour est reliée à une seconde extrémité de ladite première boucle thermique et un second état de commutation dans lequel la conduite de raccordement aller est reliée à la seconde extrémité de ladite première boucle thermique et la conduite de raccordement retour est reliée à la première extrémité de ladite première boucle thermique de manière à permettre la circulation de fluide caloporteur selon deux sens de circulation distincts depuis le module de raccordement vannage dans la première boucle thermique.

Selon un mode de réalisation, le module de raccordement vannage est apte à connecter la conduite de raccordement aller et la conduite de raccordement retour simultanément à la première boucle thermique et à une seconde boucle thermique en parallèle.

Selon un mode de réalisation, le module de raccordement vannage est apte à connecter la seconde extrémité de la première boucle thermique à la première extrémité de la seconde boucle thermique de manière à monter la première boucle thermique et la seconde boucle thermique en série.

Selon un mode de réalisation, le module de raccordement vannage comporte un organe de contrôle de flux apte à contrôler la vitesse du fluide caloporteur circulant dans les boucles thermiques.

Un aspect de l'invention part de l'idée de limiter les opérations nécessaires à l'installation d'une structure géothermique de stockage d'énergie. Un aspect de l'invention part de l'idée d'intégrer une structure géothermique à un ouvrage de terrassement, en mutualisant les coûts de la phase de construction de l'ouvrage de terrassement et les coûts de la phase de construction du dispositif géothermique. Un aspect de l'invention part de l'idée d'adapter la structure géothermique aux besoins d'un circuit d'exploitation. Un aspect de l'invention part de l'idée d'adapter la géométrie de la structure géothermique aux besoins du circuit d'exploitation. Un aspect de l'invention part de l'idée d'adapter la structure géothermique à une pluralité de besoins distincts dans un même circuit d'exploitation. Un aspect de l'invention part de l'idée d'adapter le massif de sol reconstitué aux besoins du circuit d'exploitation. Un aspect de l'invention part de l'idée d'optimiser les capacités de stockage de chaleur de la structure géothermique.

### Brève description des figures

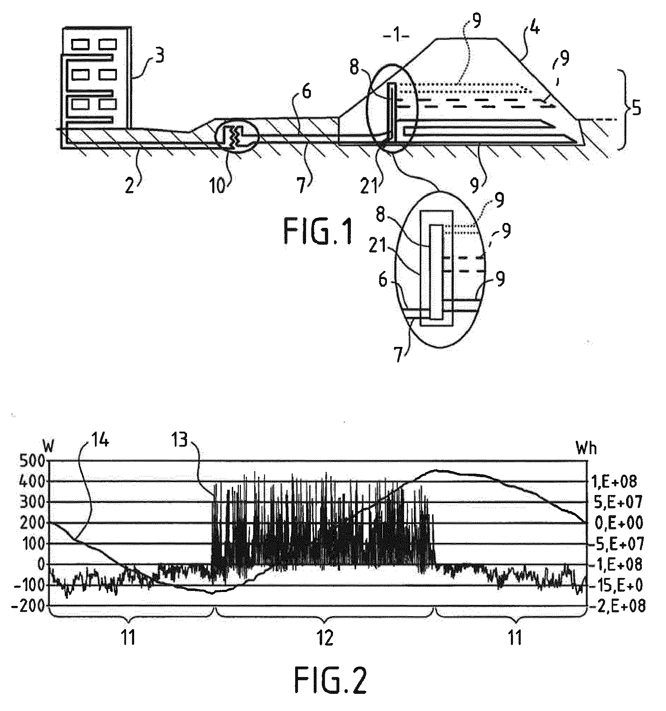

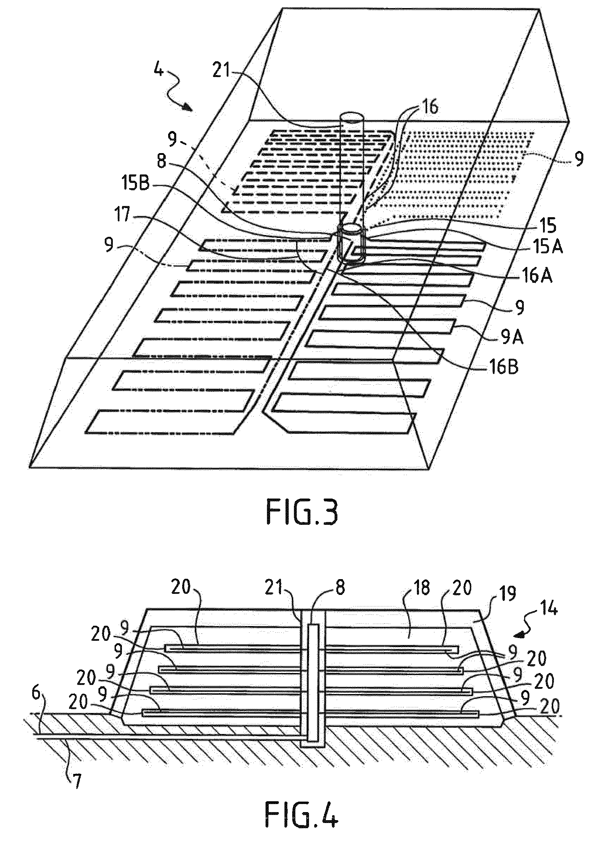

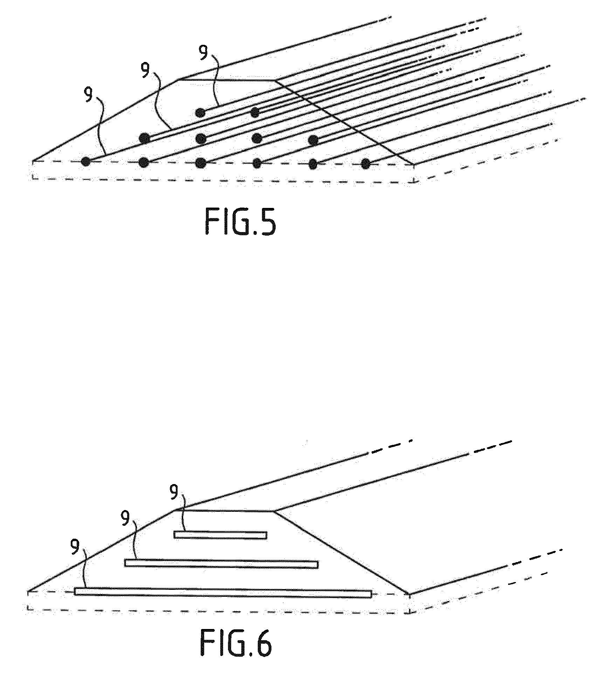

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
- **La** **figure 1** représente un dispositif géothermique de stockage alimentant un circuit d'exploitation intégré dans un immeuble avec une vue de détail d'un module de raccordement vannage ;
- **La** **figure 2** représente un diagramme de profil de charge annuel d'un massif de sol reconstitué de la figure 1 ;
- **La** **figure 3** représente en perspective un mode de réalisation d'une couche de quatre lignes de canalisations constituant autant de boucles thermiques d'un dispositif de stockage géothermique intégré dans un massif de sol reconstitué ;
- **La** **figure 4** représente une vue en coupe d'un massif de sol reconstitué comportant quatre couches de boucles thermiques superposées d'un dispositif de stockage géothermique ;
- **La** **figure 5** représente une vue en coupe et en perspective d'un merlon dans lequel est intégré un dispositif de stockage géothermique selon un premier mode de réalisation ;
- **La** **figure 6** représente une vue en coupe et en perspective d'un merlon dans lequel est intégré un dispositif de stockage géothermique selon un second mode de réalisation.

### Description détaillée de modes de réalisation

La figure 1 représente un dispositif géothermique de stockage 1 alimentant un circuit d'exploitation 2 intégré dans un bâtiment 3 avec une vue de détail d'un module de raccordement vannage 8.

Le dispositif géothermique de stockage de la figure 1 comporte un massif de sol reconstitué situé à proximité d'un client thermique tel qu'un bâtiment 3. Le massif de sol reconstitué illustré sur la figure 1 est un remblai 4 qui présente un volume compris par exemple entre 10000 m³ et 1000000 m³ de terre, de roche meuble ou de tout autre matériau, de préférence des matériaux présents à l'état naturel dans le sol. Le dispositif géothermique de stockage pourrait être intégré à tout ouvrage de terrassement situé à proximité du bâtiment 3 tel qu'un remblai réalisé lors de travaux routiers, lors de travaux ferroviaires, lors de la construction d'un merlon ou autre.

Un échangeur thermique 5 est intégré dans le remblai 4. L'échangeur thermique 5 comporte une conduite de raccordement aller 6, une conduite de retour 7, le module de raccordement vannage 8 et une pluralité de boucles thermiques 9. L'échangeur thermique 5 permet la circulation d'un fluide caloporteur tel que l'eau glycolée.

Les conduites de raccordement 6 et 7 sont connectées à une unité de distribution 10, qui peut intégrer en fonction des besoins du client thermique une pompe à chaleur. La conduite de raccordement aller 6 est connectée à l'unité de distribution 10 et alimente ladite unité de distribution 10 en fluide caloporteur en provenance de l'échangeur thermique 5. De même, la conduite de raccordement retour 7 est connectée à l'unité de distribution 10 et alimente l'échangeur thermique 5 en fluide caloporteur provenant de l'unité de distribution 10. En outre, le module de raccordement vannage 8 est connecté à l'ensemble des boucles thermiques 9.

L'unité de distribution10 est reliée au circuit d'exploitation 2 de sorte à permettre un échange thermique entre l'échangeur thermique 5 et le circuit d'exploitation 2. Dans un mode de réalisation non représenté, l'unité de distribution 10 est remplacée par une simple connexion.

Chaque boucle thermique 9 est connectée au module de raccordement vannage 8. Les boucles thermiques 9 comportent chacune une canalisation enterrée dans le remblai 4. La canalisation de chaque boucle thermique 9 forme une boucle fermée au niveau de module de raccordement vannage 8, comme expliqué ci-après en regard de la figure 3. Chaque boucle thermique 9 se développe dans une couche horizontale du remblai 4. Dans le mode de réalisation illustré sur la figure 1, l'échangeur thermique 5 comporte trois boucles thermiques 9 situées dans trois couches horizontales distinctes du remblai 4, c'est-à-dire que chaque boucle thermique 9 est située à une altitude différente dans le remblai 4. La canalisation des boucles thermiques 9 est étanche dans le remblai 4 de manière à ce qu'il n'y ait pas d'échange de fluide caloporteur entre les boucles thermiques 9 et le remblai 4.

Un puit 21 est intégré dans le remblai 4. Le module de raccordement vannage 8 est intégré dans le puit 21. Le puit 21 comporte avantageusement au moins un regard permettant d'avoir accès au module de raccordement vannage 8. Le module de raccordement vannage 8 a une fonction de liaison entre les boucles thermiques 9 et d'une part la conduite de raccordement aller 6 et, d'autre part, la conduite de raccordement retour 7 de manière à permettre la circulation de fluide caloporteur entre les boucles thermiques 9 et l'unité de distribution 10. Un exemple de fonctionnement du module de raccordement vannage 8 est décrit plus en détail ci-dessous en regard de la figure 3.

Le dispositif de stockage géothermique permet un stockage de l'énergie thermique pour le bâtiment 3. Ce stockage peut être réalisé à une échelle saisonnière, le dispositif de stockage géothermique stockant en été de l'énergie dans le remblai 4 et restituant l'énergie thermique stockée durant l'hiver. L'énergie stockée par la structure géothermique provient avantageusement du bâtiment 3, par exemple de l'évacuation de la chaleur produite par un système de climatisation (non représenté). L'énergie extraite du remblai 4 durant l'hiver est par exemple utilisée pour le chauffage du bâtiment 3. Le dispositif de stockage géothermique constitue donc un système réversible permettant selon les besoins du circuit d'exploitation 2 l'évacuation de chaleur excédentaire ou, au contraire, un apport de chaleur.

L'intégration de l'échangeur thermique 5 dans un massif de sol reconstitué tel que le remblai 4 permet de sélectionner le matériau constitutif du remblai 4 situé autour des boucles thermiques 9 indépendamment des matériaux présents initialement dans le sol (roche, terre, argile, etc...). Ainsi, il est par exemple possible de sélectionner les matériaux présents dans le remblai 4 autour des boucles thermiques 9 en fonction de leur nature (graviers et sables, argile, limon, marne, craie, matériaux élaborés à partir de calcaire, grès, granite, basalte, Gneiss, etc..), de leur texture, de leur teneur en eau ainsi que de leur densité. Par exemple, il est possible d'utiliser les matériaux présents à l'état naturel dans le sol et de les traiter afin de modifier leur densité, d'ajouter un additif, d'augmenter et/ou de diminuer leur teneur en eau en fonction des besoins du circuit d'exploitation. Il est ainsi possible de sélectionner ou élaborer un matériau plus ou moins humide et/ou dense, plus le matériau étant humide et/ou dense, plus il est conducteur et plus sa capacité calorifique est élevée. Cette sélection permet d'améliorer la capacité de stockage énergétique du remblai 4 par rapport au sol naturellement présent. Cette sélection permet également d'adapter les capacités de stockage du dispositif de stockage géothermique aux besoins du circuit d'exploitation 2.

L'intégration de l'échangeur thermique dans un massif de sol reconstitué offre une grande liberté de géométrie des boucles thermiques 9. L'intégration des boucles thermiques 9 dans au moins une couche horizontale du remblai 4 permet de déployer la canalisation des boucles thermiques 9 avec une grande liberté selon deux directions distinctes que sont la longueur et la largeur du remblai 4. Il est ainsi possible de choisir une géométrie limitant la proximité des différentes portions de canalisation afin de limiter les perturbations par transfert d'énergie non désiré entres lesdites portions de canalisations. Typiquement, il est possible d'éloigner suffisamment les portions de canalisation les unes des autres pour éviter qu'une même portion du remblai 4 n'ait d'interactions énergétique avec des portions de boucles thermiques 9 distinctes.

La figure 2 représente un diagramme de profil de charge annuel d'un remblai de la figure 1.

Les caractéristiques du dispositif de stockage géothermique sont déterminées en fonction du besoin en énergie thermique du circuit d'exploitation 2 sur une année en froid ou en chaud. Ces besoins sont à déterminer au cas par cas, un hôpital par exemple n'ayant pas les même besoins qu'un centre commercial, un complexe scolaire ou un immeuble d'habitation.

Avantageusement, le bilan énergétique annuel dans le massif de sol reconstitué est neutre, c'est-à-dire que la même quantité d'énergie thermique est injectée et extraite du remblai 4 sur une année. Cet équilibre entre l'énergie thermique injectée et l'énergie thermique extraite du remblai 4 évite une dégradation progressive des capacités de stockage du remblai 4. En effet, avec un rapport négatif, c'est-à-dire plus d'énergie thermique extraite que d'énergie thermique injectée sur un an, le remblai 4 se refroidirait de manière progressive de sorte qu'à terme le remblai 4 serait continuellement gelé et l'extraction de chaleur ne serait plus possible. Inversement, un rapport positif, c'est-à-dire une injection d'énergie thermique plus importante que l'extraction d'énergie thermique sur un an, le remblai 4 se réchaufferait d'années en années de sorte qu'il ne permettrait plus à terme l'absorption d'énergie thermique.

L'axe des abscisses sur la figure 2 représente une année. Une première période de l'année 11 correspond à une période de l'année durant laquelle la température extérieure est basse. Typiquement, la première période 11 s'étend sensiblement du milieu de l'automne au milieu du printemps et comprend l'hiver. La première période de l'année 11 est représentée schématiquement sur l'axe des abscisses par les deux accolades référencées 11 de la figure 2. Une seconde période 12 de l'année correspond à une période de l'année durant laquelle la température extérieure est élevée. Typiquement, la seconde période 12 de l'année s'étend sensiblement du milieu du printemps au milieu de l'automne et comprend l'été. La seconde période 12 de l'année est représentée schématiquement sur l'axe des abscisses par l'accolade référencée 12 de la figure 2.

La courbe 13 illustrée sur la figure 2 représente la puissance en watt injectée ou extraite du remblai 4 par l'intermédiaire de l'échangeur thermique 5. L'axe des ordonnées illustré sur la partie gauche du graphique représente l'échelle en watt associée à la courbe 13. La courbe 14 illustrée sur la figure 2 représente l'énergie cumulée en watt par heure présente dans le remblai 4. L'axe des ordonnées illustré sur la partie droite du graphique représente l'échelle en watt par heure associée à la courbe 14.

Durant la première période 11 de l'année, le bâtiment 3 nécessite pour son chauffage un apport de chaleur. Comme illustré par la courbe 13, de l'énergie thermique est extraite du remblai 4 afin de fournir cet apport de chaleur au bâtiment 3 durant la première période 11. L'extraction d'énergie thermique du remblai 4 entraîne une diminution de l'énergie cumulée présente dans le remblai 4 durant la première période 11, comme illustrée par la pente descendante de la courbe d'énergie cumulée 14.

Inversement, durant la seconde période 12 de l'année, le bâtiment 3 ne nécessite plus d'apport de chaleur voire doit évacuer de la chaleur produite par d'éventuels systèmes de climatisation. Cette chaleur est évacuée par une injection d'énergie thermique dans le remblai 4 comme l'illustre la courbe 13. Durant cette seconde période de l'année 12, le remblai 4 accumule donc de l'énergie, comme illustré par la pente ascendante de la courbe 14 d'énergie cumulée.

Ainsi, le remblai 4 permet le stockage d'énergie durant la seconde période 12 de l'année et la restitution de l'énergie stockée durant la première période 11 de l'année. La température du remblai 4 peut varier entre 3°C et 40°C. En France, un tel remblai 4 voit généralement sa température varier entre 10°C et 25°C.

La figure 3 représente une couche de quatre lignes de canalisations constituant autant de boucles thermiques de l'échangeur thermique intégrée dans le remblai 4 de la figure 1. Sur la figure 3, les conduites de raccordement 6 et 7 ne sont pas représentées pour une question de lisibilité de la figure 3.

La couche de l'échangeur thermique 5 illustrée sur la figure 3 comporte quatre boucles thermiques 9. Chaque boucle thermique 9 forme une boucle fermée raccordée au module de raccordement vannage 8 à l'intérieur du puit 21. Une première extrémité 15 de chaque boucle thermique est connectée au module de raccordement vannage 8. Une seconde extrémité 16 de chaque boucle thermique est connectée au module de raccordement vannage 8.

La géométrie de chaque boucle thermique 9 est déterminée de manière à limiter les perturbations d'une part entre les différentes portions de ladite boucle thermique 9 et, d'autre part, avec les autres boucles thermiques 9. En éloignant autant que possible les portions de canalisation présentant potentiellement des différences de températures significatives on évite qu'un échange énergétique direct ait lieu entre le fluide caloporteur entrant dans la boucle thermique 9 et le fluide sortant de la boucle thermique 9. Ainsi, dans le mode de réalisation illustré sur la figure 3 comportant quatre boucles thermiques 9, la première extrémité 15 et la seconde extrémité 16 de chaque boucle thermique 9 forme un angle 17 de 90° au niveau du puit 21. Cet angle de 90° éloigne au maximum la première extrémité 15 et la seconde extrémité 16 du 'une même boucle thermique 9 de sorte que le fluide caloporteur entrant dans la boucle thermique 9 par l'une des extrémités de ladite boucle thermique 9 est éloigné du fluide caloporteur sortant de ladite boucle thermique 9 par son autre extrémité.

De même, la géométrie de la boucle thermique est optimisée de manière à éviter les échanges énergétiques directs non désirés entre des portions de la boucle thermique 9 destinées à la circulation de flux présentant des caractéristiques énergétiques distinctes, c'est-à-dire que les portions de la boucle thermique 9 dans lesquelles le fluide caloporteur n'a pas encore extrait ou injecté d'énergie thermique dans le remblai 4, sont autant que possible éloignées des portions de la boucle thermique 9 dans lesquelles le fluide caloporteur à déjà extrait ou injecté de l'énergie thermique dans le remblai 4. Les perturbations entre les différentes boucles thermiques 9 sont également limitées ou évitées en éloignant judicieusement les boucles thermiques 9 les unes des autres dans le remblai 4. Cet éloignement est réalisé aussi bien entre les boucles thermiques 9 d'une même couche horizontale du remblai 4 qu'entre lesdites couches horizontales du remblai 4.

Le module de raccordement vannage 8 comporte une pluralité de valves (non représentées) et un dispositif de pilotage des valves. Le dispositif de pilotage des valves est apte à commuter les valves de manière à connecter la conduite de raccordement aller 6 et la conduite de retour 7 aux différentes extrémités des boucles thermiques 9.

Ainsi, le dispositif de pilotage des valves du module de raccordement vannage 8 peut piloter les valves de manière à connecter la conduite de raccordement aller 6 (voir figure 1) à la première extrémité 15A d'une première boucle thermique 9A et la conduite de raccordement retour 7 (voir figure 1) à la seconde extrémité 16A de la première boucle thermique 9A. Inversement, le dispositif de pilotage des valves du module de raccordement vannage 8 peut connecter la conduite de raccordement aller 6 à la seconde extrémité 16A de la première boucle thermique 9A et la conduite de raccordement retour 7 à la première extrémité 15A de la première boucle thermique 9A. Cette possibilité d'inverser la connexion entre les extrémités 15A, 16A de la première boucle thermique 9A et la conduite de raccordement aller 6 d'une part et, d'autre part, la conduite de raccordement retour 7 permet d'inverser le sens de circulation du fluide caloporteur dans la première boucle thermique 9A. L'inversion du sens de circulation du fluide caloporteur dans la première boucle thermique 9A permet par exemple d'uniformiser les échanges énergétiques entre la première boucle thermique 9A et le remblai 4.

Le dispositif de pilotage des valves du module de raccordement vannage 8 peut également piloter les valves de manière à connecter la conduite de raccordement aller 6 et la conduite de retour 7 simultanément à une pluralité de boucles thermiques 9. Ainsi, les différentes boucles thermiques 9 peuvent être exploités en parallèle, chaque boucle thermique 9 constituant un circuit d'échange indépendant connecté à la conduite de raccordement 6 aller et à la conduite de raccordement retour 7, ou en série, plusieurs boucles thermiques 9 étant connectées entre elles pour former une unique boucle de circulation du fluide caloporteur connectée à la conduite de raccordement aller 6 et à la conduite de raccordement retour 7. Par exemple, le dispositif de pilotage des valves du module de raccordement vannage 8 peut connecter la conduite de raccordement aller 6 à la première extrémité 15A de la première boucle thermique 9A, connecter la seconde extrémité 16A de la première boucle thermique 9A à la première extrémité 15B d'une seconde boucle thermique 9B et connecter la seconde extrémité 16B de la seconde boucle thermique 9B à la conduite de raccordement retour 7.

En outre, le module de commande de raccordement vannage 8 comporte un dispositif de pilotage de la vitesse de circulation du fluide caloporteur dans les boucles thermiques 9. Un tel dispositif de pilotage de la vitesse de circulation du fluide comporte par exemple une pompe à débit variable ou encore un moyen de contrôle de l'ouverture des valves du module de raccordement vannage 8, les valves étant plus ou moins ouverte selon que le fluide caloporteur doit circuler plus ou moins vite dans les boucles thermiques 9. L'échange thermique entre le fluide caloporteur et le milieu restant quantitativement semblable, la régulation de la vitesse du fluide caloporteur dans les boucles thermiques 9 permet d'ajuster la température du fluide caloporteur en sortie de boucle par rapport à la température du remblai 4. Plus le fluide caloporteur circule lentement dans une boucle thermique 9 plus la température de sortie de boucle sera proche de la température du remblai 4, et donc la différence de température du fluide caloporteur entre l'entrée et la sortie de boucle thermique 9 sera importante. Inversement, plus le fluide caloporteur circule vite dans une boucle thermique 9, moins la température de sortie de boucle sera proche de la température du remblai 4, et donc la différence de température du fluide caloporteur entre l'entrée et la sortie de boucle sera faible. Le diamètre des canalisations utilisées pour confectionner chaque boucle thermique 9 permet également de maîtriser la puissance échangée entre la boucle thermique 9 et le remblai 4. Une canalisation de boucle thermique 9 peut ainsi par exemple présenter un diamètre de 28 à 200mm.

La présence d'une pluralité de boucles thermiques 9 permet la présence d'une ou plusieurs boucles thermiques 9 dédiées à chaque besoin du circuit d'exploitation 2, permettant ainsi d'ajuster la configuration de l'échangeur thermique 5 à chaque besoin du circuit d'exploitation 2. Dans un exemple de réalisation, la première boucle thermique 9A peut être dédiée à la fourniture d'une chaleur importante dans le bâtiment 3 selon une périodicité brève alors que la seconde boucle thermique 9B est, elle, dédiée à la fourniture de chaleur moins importante mais sur un laps de temps plus important. Par exemple, la première boucle thermique 9A peut être dédiée à la fourniture d'eau sanitaire chaude de façon journalière à horaire fixe tel qu'entre 6h et 9h du matin, typiquement une heure à laquelle les besoins en eau sanitaire chaude sont importants pour les personnes souhaitant prendre une douche, alors que la seconde boucle thermique 9B est dédié à la fourniture de chaleur au dispositif de chauffage du bâtiment 3 qui nécessite un apport de chaleur moins important mais sur l'ensemble de la journée et sur l'ensemble de la saison hivernale.

La longueur des canalisations de chaque boucle thermique 9 est avantageusement limitée de manière à optimiser les échanges. En effet, l'échange d'énergie thermique entre la boucle thermique 9 et le remblai 4 en fonction de la longueur de la boucle thermique 9 peut être représenté par une courbe asymptotique. Au-delà d'une certaine longueur de canalisation des boucles thermiques 9, les échanges thermiques entre le fluide caloporteur circulant dans la boucle thermique 9 et le remblai 4 sont limités. La longueur préférentielle pour chaque boucle thermique 9 est calculée en fonction des propriétés thermiques des matériaux utilisés pour la construction de chaque massif de sol reconstitué.

La figure 4 représente une vue en coupe d'un massif de sol reconstitué comportant quatre couches de boucles thermiques d'un dispositif de stockage géothermique

Le remblai 4 comporte un coeur d'ouvrage 18 recouvert d'une enveloppe extérieure 19. L'enveloppe extérieure 19 de l'ouvrage constituant une couverture isolante est formée par une couche de matériaux avantageusement sélectionnés pour leur propriété isolante comme par exemple des sables siliceux sec ou des argiles sèches, et le coeur d'ouvrage 18 soumis aux variations thermiques comporte ou est constitué par des matériaux avantageusement sélectionnés pour leurs propriétés de conduction et de stockage de la chaleur tel que décrit ci-dessus en regard de la figure 1. L'enveloppe extérieure isolante 19 évite les transferts de chaleur entre l'air ambiant et le matériau de stockage contenu dans le coeur d'ouvrage 18 du remblai 4. L'enveloppe extérieure 19 isolante est par exemple réalisée en sable traité au ciment avec une faible compacité. L'enveloppe extérieure 19 isolante évite en hiver la dissipation dans l'air ambiant de la chaleur stockée dans le remblai 4 de sorte que le remblai 4 conserve sa capacité d'apport en chaleur au circuit d'exploitation 2.

Les canalisations constituant les boucles thermiques 9 sont usuellement réalisées en Polyéthylène haute densité.

Avantageusement un enrobage 20 constitué par tout matériau présentant une bonne conductivité thermique est disposé autour des canalisations des boucles thermiques 9 afin d'assurer le meilleur transfert d'énergie possible entre le fluide caloporteur circulant dans les boucles thermiques 9 et le coeur d'ouvrage 18 du massif de sol reconstitué à vocation de stockage thermique. L'enrobage 20 est par exemple réalisé en sable argileux ou en sable limoneux. Dans un exemple de réalisation, l'enrobage 20 est réalisé en sable limono-argileux très humide, auto plaçant afin d'obtenir un compactage optimal, et sur une épaisseur de 20cm autour des canalisations des boucles thermiques 9. Un tel enrobage 20 offre de bonnes propriétés de conductivité thermique ainsi qu'une grande facilité de mise en oeuvre. De même, le coeur d'ouvrage 18 à vocation de stockage thermique est par exemple réalisé en limon argileux ou en argile limoneuse.

Les figures 5 et 6 représentent des vues en coupe du massif de sol reconstitué illustrant des exemples de géométrie possible pour l'implantation des boucles thermiques 9. Sur ces figures 5 et 6, le massif de sol reconstitué est un merlon présentant une longueur de 500m, une hauteur de 11,75m, une pente de 27°, une largeur à la base de 50m et une largeur au sommet de 3m pour un volume total de 155688m³. Dans ce merlon, le dispositif de stockage géothermique comporte trois couches de boucles thermiques 9 dont les canalisations sont distantes de 2,5m. Selon le mode de réalisation illustré sur la figure 5, les canalisations des boucles thermiques 9 se développent sur leur plus grande longueur parallèlement à la longueur du merlon. Selon le mode de réalisation illustré sur la figure 6, les canalisations des boucles thermiques 9 se développent sur leur plus grande longueur parallèlement à la largeur du merlon. La coupe de la figure 6 illustre une section du merlon au niveau de la plus grande longueur de canalisation des boucles thermiques 9. Le mode de réalisation illustré sur la figure 6 offre une géométrie dans laquelle les portions de canalisations proches des côtés du merlon, c'est-à-dire de l'air ambiant, sont limitées. Cette géométrie permet ainsi de limiter les pertes d'énergie entre les boucles thermiques 9 et l'air ambiant.

Le dispositif de stockage géothermique décrit ci-dessus offre de bonnes performances énergétiques. Par exemple, le dispositif de stockage géothermique offre un ratio de 71.6 kWh/ml.an (kilo Watt heure par mètre linéaire de canalisation d'échangeur et par an) dans le cas d'un dispositif de stockage géothermique installé dans un remblai 4 présentant une conductivité thermique de 1,3 W/m.K, dans le cas d'un remblai 4 présentant une conductivité thermique de 2.3 W/m.K, ce ratio passe à 100,3 kWh/ml.

L'unité de distribution 10 peut être un échangeur de chaleur actif tel qu'une pompe à chaleur ou encore un échangeur passif tel qu'un échangeur à plaque. L'unité de distribution 10 (échangeur de chaleur actif ou passif) permet ainsi de transférer de la chaleur depuis le dispositif de stockage géothermique vers le circuit d'exploitation 2, typiquement pendant les mois d'hiver (période 11 de la figure 2). Le Fonctionnement de l'unité de distribution doit alors être inversé pour transférer de la chaleur depuis le circuit d'exploitation 2 vers le dispositif de stockage géothermique pour recharger celui-ci en chaleur, typiquement pendant les mois d'été (période 12 de la figure 2).

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

Ainsi, l'invention couvre tout type de régulation thermique et la structure illustrée par les exemples donnés ci-dessus en regard des figures pour une utilisation en stockage de chaleur peut également et avantageusement, en fonction des besoins, être utilisée pour le stockage de froid ou même pour le stockage de froid et de chaleur.

De même, l'unité de distribution décrite ci-dessus peut comporter un circuit de distribution destiné à alimenter une pluralité de circuits d'exploitation, une même unité de distribution permettant ainsi d'alimenter une pluralité de bâtiments en même temps.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

## Revendications

1. Dispositif géothermique de stockage d'énergie comportant :
- un massif de sol reconstitué (4) comportant un coeur interne (18),
- un échangeur thermique comportant
o un module de raccordement Vannage (8),
o une conduite de raccordement aller (6) connectée au module de raccordement vannage (8) et destinée à alimenter une unité de distribution (10) en fluide caloporteur provenant du module de raccordement vannage (8),
o une conduite de raccordement retour (7) connectée au module de raccordement vannage (8) et destinée à alimenter ledit module de raccordement vannage (8) en fluide caloporteur provenant de l'unité de distribution 10,
o une pluralité de boucles thermiques (9) comportant chacune une canalisation de circulation du fluide caloporteur, chaque canalisation présentant une géométrie en boucle et étant intégrée dans le massif de sol reconstitué, des extrémités de chaque canalisation étant connectées au travers du module de raccordement vannage (8) aux conduites de raccordement de manière à permettre la circulation du fluide caloporteur sélectivement depuis ou vers une ou plusieurs boucles thermiques respectivement vers ou depuis les conduites de raccordement
et dans lequel chaque boucle thermique se développe dans au moins une couche horizontale de le massif de sol reconstitué, les boucles thermiques étant distribués dans plusieurs couches horizontales situées à des altitudes distinctes dans le massif de sol reconstitué, et dans lequel le massif de sol reconstitué comporte une couche de couverture isolante (19) recouvrant le coeur interne (18) du massif de sol reconstitué, les boucles thermiques étant intégrées dans le coeur interne du massif de sol reconstitué, le coeur interne du massif de sol reconstitué comportant au moins un matériau à capacité de stockage thermique disposé entre les boucles thermiques de manière à permettre un échange thermique avec au moins une boucle thermique, la couche de couverture isolante présentant une conductivité thermique plus faible que le coeur interne du massif de sol reconstitué et le coeur interne du massif de sol reconstitué présentant une capacité calorifique plus élevée que la couche isolante.

2. Dispositif géothermique de stockage d'énergie selon la revendication 1, dans lequel la couche de couverture isolante (19) est composée d'un matériau choisi dans le groupe constitué des sables siliceux sec, des argiles sèches, des sables traités au ciment présentant une faible compacité.

3. Dispositif géothermique de stockage d'énergie selon l'une des revendications 1 à 2, dans lequel le matériau à capacité de stockage thermique disposé entre les boucles thermiques est choisi dans le groupe constitué du limon argileux, de l'argile limoneuse, du limon, de la marne, de la craie, des matériaux élaborés à partir de calcaire, du grès, du granite, du basalte et du Gneiss.

4. Dispositif géothermique de stockage d'énergie selon l'une des revendications 1 à 3, comportant en outre autour d'au moins une canalisation de boucle thermique un enrobage en matériau thermiquement conducteur agencé de manière à augmenter la capacité de transfert thermique de ladite boucle thermique vers le coeur interne du massif de sol reconstitué.

5. Dispositif géothermique de stockage d'énergie selon la revendication 4, dans lequel le matériau thermiquement conducteur de l'enrobage est choisi dans le groupe constitué du sable argileux humide et du sable limoneux humide.

6. Dispositif géothermique de stockage d'énergie selon l'une des revendications 1 à 5, dans lequel la première extrémité et la seconde extrémité d'une boucle thermique forment un angle supérieur à 45° et de préférence supérieur ou égal à 90° au niveau du module de raccordement vannage.

7. Dispositif géothermique de stockage d'énergie selon l'une des revendications 1 à 6, dans lequel le module de raccordement vannage (8) comporte une pluralité de valves à états commutables pilotées par une unité de commande, le module de raccordement vannage (8) comportant au moins un premier état de commutation dans lequel la conduite de raccordement aller est reliée à une première extrémité d'une première boucle thermique et la conduite de raccordement retour est reliée à une seconde extrémité de ladite première boucle thermique et un second état de commutation dans lequel la conduite de raccordement aller est reliée à la seconde extrémité de ladite première boucle thermique et la conduite de raccordement retour est reliée à la première extrémité de ladite première boucle thermique de manière à permettre la circulation de fluide caloporteur selon deux sens de circulation distincts depuis le module de raccordement vannage (8) dans la première boucle thermique.

8. Dispositif géothermique de stockage d'énergie selon la revendication 7, dans lequel le module de raccordement vannage (8) est apte à connecter la conduite de raccordement aller et la conduite de raccordement retour simultanément à la première boucle thermique et à une seconde boucle thermique en parallèle.

9. Dispositif géothermique de stockage d'énergie selon l'une des revendications 7 à 8, dans lequel le module de raccordement vannage (8) est apte à connecter la seconde extrémité de la première boucle thermique à la première extrémité de la seconde boucle thermique de manière à monter la première boucle thermique et la seconde boucle thermique en série.

10. Dispositif géothermique de stockage d'énergie selon l'une des revendications 1 à 9, dans lequel le module de raccordement vannage (8) comporte un organe de contrôle de flux apte à contrôler la vitesse du fluide caloporteur circulant dans les boucles thermiques.
